# EUROPEAN PATENT SPECIFICATION

(11) **EP 2 949 634 B1**
(45) Date of publication and mention of the grant of the patent: **11.03.2020**
(21) Application number: 15169601.0
(22) Date of filing: 28.05.2015
(51) Int. Cl.: C04B 38/00, F01D 5/14, F01D 5/18

(54) **TRANSPIRATION-COOLED ARTICLE HAVING NANOCELLULAR FOAM**
TRANSPIRATIONSGEKÜHLTER ARTIKEL MIT NANOZELLULÄREM SCHAUMSTOFF
ARTICLE REFROIDI PAR LA TRANSPIRATION AVEC UNE MOUSSE NANO-CELLULAIRE

(30) Priority: 29.05.2014 US 201462004254 P
(43) Date of publication of application: 02.12.2015
(73) Proprietor: United Technologies Corporation, Farmington, CT 06032 (US)
(72) Inventor: Birnkrant, Michael J., Kenilworth, NJ 07033 (US); Mongillo, Jr., Dominic J., West Hartford, CT 06107 (US); Wagner, Joel H., Wethersfield, CT 06109 (US); Li, Weina, South Glastonbury, CT 06073 (US); Santana, Jose L., Vernon, CT 06066 (US); Clum, Carey, East Hartford, CT 06118 (US); Beals, James T., West Hartford, CT 06107 (US)
(74) Representative: Dehns

(56) References cited:
- EP-A2- 2 230 384
- US-A- 5 690 473
- US-A1- 2014 044 951
- US-B1- 6 443 700
- US-B2- 7 144 220

## Description

### BACKGROUND

This disclosure relates to cooled structures. Structures that operate in relatively high-temperature environments can be cooled by providing a cooling fluid over the outer surfaces. For example, in a gas turbine engine, airfoils include machined holes for film cooling using relatively cool air from the compressor. Film cooling is effective on the pressure side of an airfoil; yet, it is not possible on the suction side. The suction side has a high degree of boundary layer mixing causing a significant decrease in cooling effectiveness.

An article having the features of the preamble of claim 1 is disclosed in US 7144220 B2.

### SUMMARY

The present invention provides a transpiration-cooled article as set forth in claim 1.

In an embodiment of any of the above, the nanocellular foam is metallic.

In a further embodiment of any of the foregoing embodiments, the nanocellular foam is selected from the group consisting of nickel, tantalum, tungsten, rhenium, niobium, hafnium, platinum, ruthenium, rhodium, palladium, osmium, iridium, copper, iron, molybdenum, yttrium, manganese, aluminum, chromium, cobalt, and combinations thereof.

In a further embodiment, the nanocellular foam is ceramic material.

In an embodiment of the foregoing embodiment, the ceramic material is selected from the group consisting of oxides, nitrides, carbides, borides, silicides, and combinations thereof.

In an embodiment of any of the foregoing embodiments, the ceramic material is a ternary ceramic.

In an embodiment of any of the foregoing embodiments, the ceramic material is selected from the group consisting of manganese oxide, zinc oxide, silicon carbide, aluminum oxide, and combinations thereof.

In a further embodiment of any of the foregoing embodiments, the nanocellular foam has a porosity of 5-95%.

In a further embodiment of any of the foregoing embodiments, the nanocellular foam has a pore volume of 0.01-0.1 milliliters per gram.

The invention also provides a transpiration-cooled airfoil as set forth in claim 10.

In an embodiment of the foregoing embodiment, the airfoil body includes a leading edge and a trailing edge and a first sidewall and a second sidewall that is spaced apart from the first sidewall. The first sidewall and the second sidewall join the leading edge and the trailing edge and at least partially define the internal passage. The nanocellular foam is located in the first sidewall. The first sidewall is a suction side of the airfoil body.

In a further embodiment of any of the foregoing embodiments, the airfoil body includes a leading edge and a trailing edge and a first sidewall and a second sidewall that is spaced apart from the first sidewall. The first sidewall and the second sidewall join the leading edge and the trailing edge and at least partially define the internal cavity. The airfoil body extends from a platform end wall, and the nanocellular foam is in the platform end wall.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates an example gas turbine engine.
Figure 2 illustrates a cross-section through a selected portion of a transpiration-cooled article which falls outside the scope of the claims.
Figure 3 illustrates a micrograph of a representative portion of a nanocellular foam.
Figure 4 illustrates another example transpiration-cooled article which falls outside the scope of the claims.
Figure 5 illustrates a cross-section according to the section line shown in Figure 4.
Figure 6 illustrates an isolated view of a cross-section through a nanocellular foam window which falls outside the scope of the claims.
Figure 7 illustrates an isolated view of a cross-section through a nanocellular foam window of an article in accordance with the invention.
Figure 8 illustrates a cross-section through a selected portion of another example transpiration-cooled article which falls outside the scope of the claims.

### DETAILED DESCRIPTION

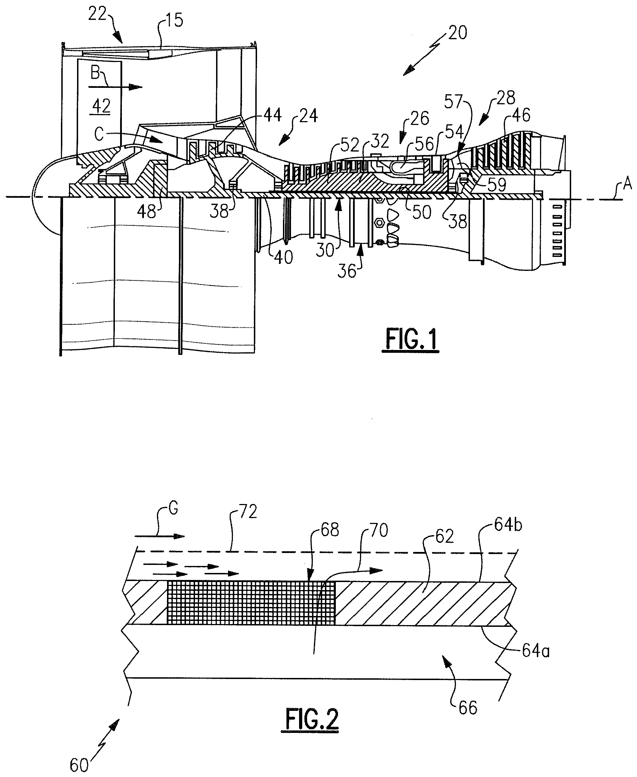

Figure 1 illustrates an example gas turbine engine 20. The gas turbine engine 20 disclosed herein is a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it is to be understood that this disclosure is not limited to two-spool turbofans and the teachings herein may be applied to other types of turbine engines, including but not limited to direct-drive engines, three-spool engines, and ground-based power turbines.

The engine 20 includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 includes an inner shaft 40 that interconnects a fan 42, a first (or low) pressure compressor 44 and a first (or low) pressure turbine 46. The inner shaft 40 is connected to the fan 42 through a speed change mechanism, which in the exemplary gas turbine engine 20 is illustrated as a geared architecture 48, to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 57 of the engine static structure 36 is arranged between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10). The geared architecture 48 can be an epicyclic gear train, such as a planetary gear system or other gear system, with a gear reduction ratio of greater than about 2.3, and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The above parameters are only exemplary and that the present disclosure is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10668 m). The flight condition of 0.8 Mach and 35,000 ft (10668 m), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/s).

Figure 2 illustrates a cross-section through a selected portion of a transpiration-cooled article 60 (hereafter "article 60") which falls outside the scope of the claims that can be used in the turbine engine 20. The article 60 can be an airfoil component, a blade outer air seal, a combustor liner, or the like that is exposed to high temperatures. Although the article 60 may be described with respect to use in the environment of the engine 20 or a similar machine, this disclosure is not limited to turbine engines or turbine engine components.

The article 60 includes a body wall 62 that has first and second opposed surfaces 64a and 64b. The first surface 64a is adjacent a passage 66 that is configured to receive a pressurized cooling fluid. For example, the passage 66 is connected with a source of pressurized cooling fluid, such as but not limited to, pressurized air from the compressor section 24.

At least a portion of the body wall 62 includes nanocellular foam 68 through which the pressurized cooling fluid from the passage 66 can flow to the second surface 64b, as represented at 70, to cool the second surface 64b.

The nanocellular foam 68 has controlled pore characteristics with respect to a design discharge velocity of the pressurized cooling fluid 70 and a design boundary flow condition. For example, the second surface 64b of the body wall 62 is a gas-path surface (e.g., in core flow path C). Friction between the moving gas in the gas-path and the second surface 64b creates a boundary layer, generally represented at 72. The gas in the boundary layer 72 moves at a slower velocity than the main flow of gas in the gas-path, represented at G. The controlled pore characteristics of the nanocellular foam 68 are selected such that, at a predefined state of operation having a given pressure of pressurized cooling fluid in the passage 66 and known characteristics that define a design boundary flow condition of the boundary layer 72, there is a design discharge velocity of the pressurized cooling fluid that is leaked or emitted from the nanocellular foam 68. For example, the pore characteristics of the nanocellular foam 68 are selected such that the design discharge velocity is below a velocity threshold that would otherwise jet the pressurized cooling fluid through the boundary layer 72 into the main gas-path flow, where it would be lost and fail to efficiently provide cooling along the second surface 64b of the body wall 62. Rather, the controlled pore characteristics of the nanocellular foam 68 provide a pressure drop between the passage 66 and the second surface 64b such that the design discharge velocity is below the threshold and the pressurized cooling fluid leaks into the boundary layer 72 and across the surface 64b rather than jetting through the boundary layer 72. In this regard, the nanocellular foam 68 can facilitate cooling of the body wall 62.

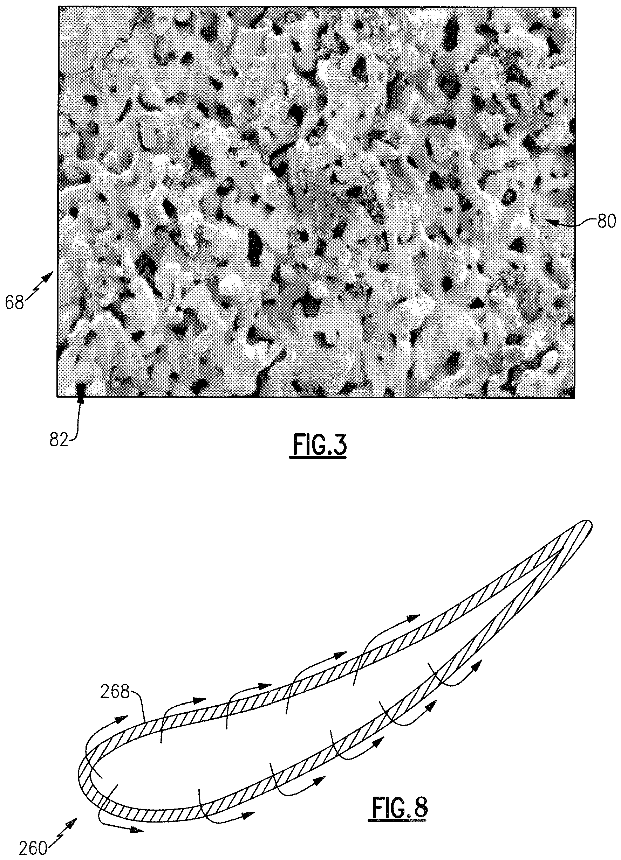

Figure 3 shows a micrograph of a representative cross-section of the nanocellular foam 68. As shown, the nanocellular foam 68 is an interconnected network of ligaments 80 between which interconnected pores 82 extend. The nanocellular foam 68 has an open porosity through which the pressurized cooling fluid can travel from the passage 66 to the second surface 64b. The path provided by the pores 82 is circuitous and narrow such that there is a relatively large pressure drop across the nanocellular foam 68. The pressure drop and circuitous path slow the velocity of the pressurized cooling fluid such that the nanocellular foam 68 emits the cooling fluid at the second surface 64b with a low design discharge velocity.

The nanocellular foam 68 can be formed of a metallic material, polymeric material, a ceramic material, or combinations thereof. The selected composition can depend on article design factors, such as but not limited to, temperature resistance and strength. The metallic material can be selected from nickel, tantalum, tungsten, rhenium, niobium, hafnium, platinum, ruthenium, rhodium, palladium, osmium, iridium, copper, iron, molybdenum, yttrium, manganese, aluminum, chromium, cobalt, and combinations thereof. The ceramic material can be selected from oxides, nitrides, carbides, borides, silicides, and combinations thereof.

In a further example, the ceramic material can be a ternary ceramic (a MAX phase material). A MAX phase material has a formula Mn+1AXn, where n=1-3, M is an early transition metal, A is an A-group element of the Periodic Table, and X includes at least one of carbon and nitrogen. In further examples, the M in the formula can be selected from Sc, Ti, Zr, Hf, V, Nb, Ta, Cr, Mo, and combinations thereof, and the A in the formula can be selected from Cd, Al, Gd, In, Tl, Si, Ge, Sn, Pb, P, As, S, and combinations thereof. The MAX phase material can be selected from: Ti₂CdC, Sc₂InC, Ti₂AlC, Ti₂GaC, Ti₂InC, Ti₂TlC, V₂AlC, V₂GaC, Cr₂GaC, Ti₂AlN, Ti₂GaN, Ti₂InN, V₂GaN, Cr₂GaN, Ti₂GeC, Ti₂SnC, Ti₂PbC, V₂GeC, Cr₂Alc, Cr₂GeC, V₂PC, V₂AsC, Ti₂SC, Zr₂InC, Zr₂TlC, Nb₂AlC, Nb₂GaC, Nb₂InC, Mo₂GaC, Zr₂InN, Zr₂TlN, Hf₂InC, Hf₂TlC, Ta₂AlC, Ta₂GaC, Ti₂GeC, Ti₂SnC, Ti₂PbC, V₂GeC, Cr₂AlC, Cr₂GeC, Zr₂SnC, Zr₂PbC, Nb₂SnC, Hf₂SnC, Hf₂PbC, Hf₂SnN, V₂PC, V₂AsC, Nb₂PC, Nb₂AsC, Ti₂SC, Zr₂SC, Nb₂SC, Hf₂SC, Ti₃AlC2, V₃AlC₂, Ta₃AlC₂, Ti₃SiC₂, Ti₃GeC₂, Ti₃SnC₂, Ti₄AlN₃, V₄AlC₃, Ti₄GaC₃, Nb₄AlC₃, Ta₄AlC₃, Ti₄SiC₃, Ti4GeC₃, and combinations thereof, but is not limited to these examples.

In further examples, the ceramic material can include at least one of manganese oxide (MnO₂), zinc oxide (ZnO), silicon carbide (SiC), silicon nitride (Si₃N₄) or alumina (Al₂O₃). Examples of polymer materials can include polyamide 66, polyesters, polycarbonates, and polyimide. The disclosed metallic and ceramic materials have relatively high temperature resistance and can, thus, withstand high temperature environments, such as those encountered in the gas turbine engine 20.

In further examples, the controlled pore characteristics of the nanocellular foam 68 can include one or more of a controlled average pore size, controlled hydraulic diameter, percent porosity, surface area and controlled pore volume that are selected with respect to the design discharge velocity of the pressurized cooling fluid from the nanocellular foam 68 and the design boundary flow condition based on the boundary layer 72. The nanocellular foam 68 has an average pore size of less than 1 micrometer. In a further example, the nanocellular foam 68 has a controlled porosity of 5-95%, and in a further example has a porosity of 10-50%. In yet a further example, the nanocellular foam has a controlled pore volume of 0.01-0.1 milliliters per gram.

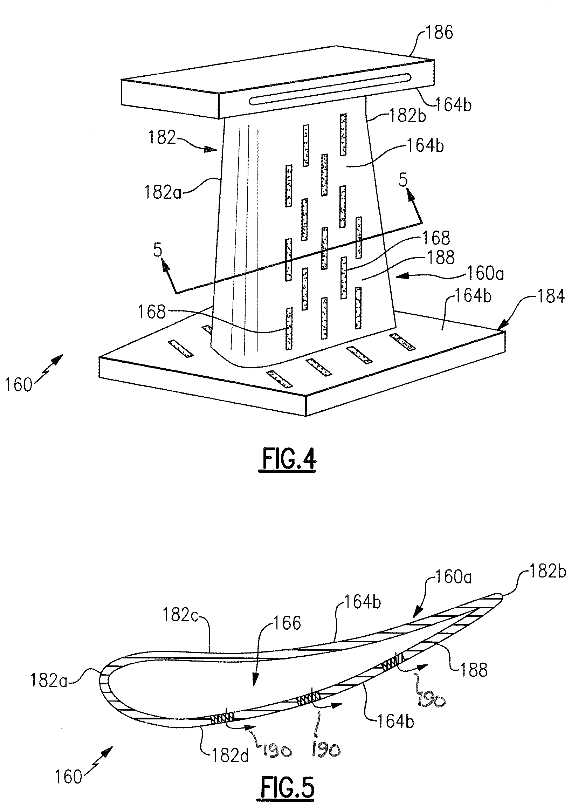

Figure 4 illustrates another transpiration-cooled article which falls outside the scope of the claims, which in this example is a transpiration-cooled airfoil 160 (hereafter "airfoil 160"). Figure 5 shows a cross-section taken along the section line shown in Figure 4. In this disclosure, like reference numerals designate like elements where appropriate and reference numerals with the addition of one-hundred or multiples thereof designate modified elements that are understood to incorporate the same features and benefits of the corresponding elements.

The airfoil 160 includes an airfoil body 160a that has an inner surface 164a and an outer, gas-path surface 164b. The airfoil body includes an internal passage 166 and, similar to the article 60, at least a portion of the airfoil body 160a includes nanocellular foam 168 through which cooling fluid from the internal passage 166 can flow to the gas-path surface 164b. The geometry of the internal passage 166 and the location of the nanocellular foam 168 are not limited to that shown. In further examples, although not limited, the article can be an article as disclosed in U.S. Patent No. 7,144,220 and the nanocellular foam can be located according to the location of the reticulated regions disclosed therein. The nanocellular foam of the present disclosure is fabricated using nanowire processing.

Nanowire processing involves forming an arrangement of loose nanowires into the shape of an article using a deposition technique or mold. The nanowires are then bonded into a unitary structure. For example, the nanowires can be sintered together using a suitable technique to form an article. During the thermal sintering, the surfaces of the nanowires that are in contact with each other permanently bond together. The loose nanowires thus serve as the fundamental "building blocks" for fabricating the article.

The airfoil 160 includes an airfoil portion 182 that extends between a leading end 182a and a trailing end 182b and a first sidewall 182c and a second sidewall 182d that is spaced apart from the first sidewall 182c. The sidewalls 182c/182d join the leading end 182a and the trailing end 182b. The internal passage 166 is defined, at least in part, by the first and second sidewalls 182c/182d, which also correspond to the gas-path surface 164b.

In this example, the airfoil portion 182 extends from a platform end wall 184. The platform end wall 184 is on a radially inner end of the airfoil portion 182, relative to the orientation of the airfoil 160 with respect to the longitudinal axis A when the airfoil 160 is mounted in the engine 20. In this example, the airfoil 160 also includes an outer platform end wall 186, although the airfoil 160 is not limited to the design shown, which is a static vane. The airfoil 160 can alternatively have a different design or can be a rotatable blade, such as, but not limited to, a fan blade, a compressor blade, or a turbine blade.

The nanocellular foam 168 can be on the airfoil portion 182, the platform end walls 184/186, or both of these areas. In this example, the nanocellular foam 168 is provided in multiple, discrete windows that are each surrounded by solid walls 188 of the airfoil 160. Although plural windows of equivalent geometry are shown, fewer or additional windows could be used, and the windows may have equivalent or different geometries from each other.

The cooling fluid in the internal passage 166 can only exit from the internal passage 166 through the nanocellular foam 168 windows, as shown at 190 in Figure 5.

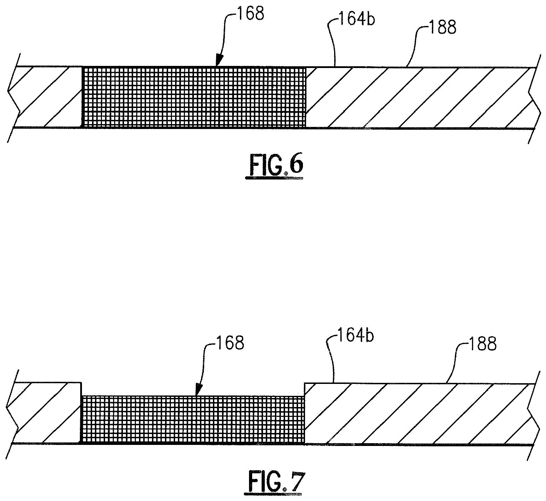

Figure 6 shows an isolated view of an area through one of the nanocellular foam 168 windows. In this example, the nanocellular foam 168 is flush with the gas-path surface 164b. In an embodiment of the invention, shown in Figure 7, the nanocellular foam 168 window is recessed at least from the gas-path surface 164b. The recessing of the nanocellular foam 168 window further facilitates leaking the cooling fluid across the gas-path surface 164b with a desired design discharge velocity below a given threshold, discussed above. As can be appreciated, the above examples of the pore characteristics and composition can also be incorporated into the article 160.

Figure 8 shows another example transpiration-cooled airfoil 260 which falls outside the scope of the claims. In this example, rather than one or more discrete windows of nanocellular foam, a substantial portion of the wall of the airfoil is nanocellular foam 268. For example, at least 50% or more of the area of the wall of the airfoil 260 can be formed of the nanocellular foam 268, to facilitate cooling over a greater surface area.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from the essence of this disclosure. The scope of legal protection given to this disclosure can only be determined by studying the following claims.

## Claims

1. A transpiration-cooled article (160) comprising:
a body wall (62) having first and second opposed surfaces (164a,164b), the first surface (164a) is adjacent a passage (166) that is configured to receive a pressurized cooling fluid and the second surface (164b) being an outer gas path surface;
wherein at least a portion of the body wall (62) includes a nanocellular foam (168) through which the pressurized cooling fluid from the passage (166) can flow to the second surface (164b), the nanocellular foam including an interconnected network of ligaments (80) between which interconnected pores extend;
wherein the body wall (62) includes at least one discrete window of the nanocellular foam (168) surrounded by solid wall(s); **characterized in that**:
the nanocellular foam (168) has an average pore size of less than 1 micrometer; and **in that** the window of nanocellular foam (168) is recessed from the second surface (164b) .

2. The transpiration-cooled article as recited in claim 1, wherein the nanocellular foam (168) has a porosity of 5-95%.

3. The transpiration-cooled article as recited in claim 2, wherein the nanocellular foam (168) has a pore volume of 0.01-0.1 milliliters per gram.

4. The transpiration-cooled article as recited in any preceding claim, wherein the nanocellular foam (168) is metallic.

5. The transpiration-cooled article as recited in claim 4, wherein the nanocellular foam is selected from the group consisting of nickel, tantalum, tungsten, rhenium, niobium, hafnium, platinum, ruthenium, rhodium, palladium, osmium, iridium, copper, iron, molybdenum, yttrium, manganese, aluminum, chromium, cobalt, and combinations thereof.

6. The transpiration-cooled article as recited in any of claims 1 to 3, wherein the nanocellular foam (168) is ceramic material.

7. The transpiration-cooled article as recited in claim 6, wherein the ceramic material is selected from the group consisting of oxides, nitrides, carbides, borides, silicides, and combinations thereof.

8. The transpiration-cooled article as recited in claim 6, wherein the ceramic material is a ternary ceramic.

9. The transpiration-cooled article as recited in claim 6, wherein the ceramic material is selected from the group consisting of manganese oxide, zinc oxide, silicon carbide, aluminum oxide, and combinations thereof.

10. The transpiration-cooled article of any preceding claim, the article being an airfoil (160) comprising:
an airfoil body (160a) that includes said body wall (62) and said internal passage (166).

11. The transpiration-cooled airfoil as recited in claim 10, wherein the airfoil body (160a) includes a leading edge (182a) and a trailing edge (182b) and a first sidewall (182c) and a second sidewall (182d) that is spaced apart from the first sidewall (182c), the first sidewall (182c) and the second sidewall (182d) join the leading edge (182a) and the trailing edge (182b) and at least partially define the internal passage (166), and the nanocellular foam (168) is located in the second sidewall (182d), and the second sidewall (182d) is a suction side of the airfoil body (160a).

12. The transpiration-cooled airfoil as recited in claim 10 or 11, wherein the airfoil body (160a) includes a leading edge (182a) and a trailing edge (182b) and a first sidewall (182c) and a second sidewall (182d) that is spaced apart from the first sidewall (182c), the first sidewall (182c) and the second sidewall (182d) join the leading edge (182a) and the trailing edge (182b) and at least partially define the internal cavity (166), the airfoil body (160a) extending from a platform end wall (184), and the nanocellular foam (168) is in the platform end wall (164).

## Patentansprüche

1. Transpirationsgekühlter Artikel (160), umfassend:
eine Körperwand (62), die erste und zweite gegenüberliegende Oberflächen (164a, 164b) aufweist, wobei die erste Oberfläche (164a) einem Durchgang (166) benachbart ist, der dazu konfiguriert ist, ein unter Druck stehendes Kühlungsfluid zu empfangen, und wobei die zweite Oberfläche (164b) eine äußere Gaswegoberfläche ist;
wobei mindestens ein Abschnitt der Körperwand (62) einen nanozellulären Schaumstoff (168) beinhaltet, durch den das unter Druck stehende Kühlungsfluid aus dem Durchgang (166) zu der zweiten Oberfläche (164b) fließen kann, wobei der nanozelluläre Schaumstoff ein miteinander verbundenes Netzwerk von Bändern (80) beinhaltet, zwischen denen sich miteinander verbundene Poren erstrecken;
wobei die Körperwand (62) mindestens ein separates Fenster des nanozellulären Schaumstoffs (168) beinhaltet, das von einer festen Wand/festen Wänden umgeben ist; **dadurch gekennzeichnet, dass**:
der nanozelluläre Schaumstoff (168) eine durchschnittliche Porengröße von weniger als 1 Mikrometer aufweist und dass das Fenster des nanozellulären Schaumstoffs (168) von der zweiten Oberfläche (164b) eingelassen ist.

2. Transpirationsgekühlter Artikel nach Anspruch 1, wobei der nanozelluläre Schaumstoff (168) eine Porosität von 5-95 % aufweist.

3. Transpirationsgekühlter Artikel nach Anspruch 2, wobei der nanozelluläre Schaumstoff (168) ein Porenvolumen von 0,01-0,1 Millilitern pro Gramm aufweist.

4. Transpirationsgekühlter Artikel nach einem der vorhergehenden Ansprüche, wobei der nanozelluläre Schaumstoff (168) metallisch ist.

5. Transpirationsgekühlter Artikel nach Anspruch 4, wobei der nanozelluläre Schaumstoff aus der Gruppe bestehend aus Nickel, Tantal, Wolfram, Rhenium, Niob, Hafnium, Platin, Ruthenium, Rhodium, Palladium, Osmium, Iridium, Kupfer, Eisen, Molybdän, Yttrium, Mangan, Aluminium, Chrom, Kobalt und Kombinationen davon ausgewählt ist.

6. Transpirationsgekühlter Artikel nach einem der Ansprüche 1 bis 3, wobei der nanozelluläre Schaumstoff (168) aus Keramikmaterial besteht.

7. Transpirationsgekühlter Artikel nach Anspruch 6, wobei das Keramikmaterial aus der Gruppe bestehend aus Oxiden, Nitriden, Carbiden, Boriden, Siliziden und Kombinationen davon ausgewählt ist.

8. Transpirationsgekühlter Artikel nach Anspruch 6, wobei das Keramikmaterial ternäre Keramik ist.

9. Transpirationsgekühlter Artikel nach Anspruch 6, wobei das Keramikmaterial aus der Gruppe bestehend aus Manganoxid, Zinkoxid, Siliziumkarbid, Aluminiumoxid und Kombinationen davon ausgewählt ist.

10. Transpirationsgekühlter Artikel nach einem der vorhergehenden Ansprüche, wobei der Artikel eine Schaufel (160) ist, umfassend:
einen Schaufelkörper (160a), der die Körperwand (62) und den innenliegenden Durchgang (166) beinhaltet.

11. Transpirationsgekühlte Schaufel nach Anspruch 10, wobei der Schaufelkörper (160a) eine Vorderkante (182a) und eine Hinterkante (182b) und eine erste Seitenwand (182c) und eine zweite Seitenwand (182d) beinhaltet, die von der ersten Seitenwand (182c) beabstandet ist, wobei die erste Seitenwand (182c) und die zweite Seitenwand (182d) mit der Vorderkante (182a) und der Hinterkante (182b) verbunden sind und den innenliegenden Durchgang (166) zumindest teilweise definieren, und wobei sich der nanozelluläre Schaumstoff (168) in der zweiten Seitenwand (182d) befindet und wobei die zweite Seitenwand (182d) eine Ansaugseite des Schaufelkörpers (160a) ist.

12. Transpirationsgekühlte Schaufel nach Anspruch 10 oder 11, wobei der Schaufelkörper (160a) eine Vorderkante (182a) und eine Hinterkante (182b) und eine erste Seitenwand (182c) und eine zweite Seitenwand (182d) beinhaltet, die von der ersten Seitenwand (182c) beabstandet ist, wobei die erste Seitenwand (182c) und die zweite Seitenwand (182d) mit der Vorderkante (182a) und der Hinterkante (182b) verbunden sind und den innenliegenden Hohlraum (166) zumindest teilweise definieren, wobei der Schaufelkörper (160a) sich von einer Plattformendwand (184) erstreckt und sich der nanozelluläre Schaumstoff (168) in der Plattformendwand (164) befindet.

## Revendications

1. Article refroidi par transpiration (160) comprenant :
une paroi corporelle (62) ayant des première et seconde surfaces opposées (164a, 164b), la première surface (164a) est adjacente à un passage (166) qui est conçu pour recevoir un fluide de refroidissement pressurisé et la seconde surface (164b) étant une surface de trajet de gaz externe ;
dans lequel au moins une portion de la paroi corporelle (62) comporte une mousse nanocellulaire (168) à travers laquelle le fluide de refroidissement pressurisé issu du passage (166) peut s'écouler vers la seconde surface (164b), la mousse nanocellulaire comportant un réseau interconnecté de ligaments (80) entre lesquels des pores interconnectés s'étendent ;
dans lequel la paroi corporelle (62) comporte au moins une fenêtre discrète de la mousse nanocellulaire (168) entourée par une (des) paroi(s) solide(s) ; **caractérisé en ce que** :
la mousse nanocellulaire (168) a une taille moyenne de pore de moins de 1 micromètre ; et **en ce que** la fenêtre de mousse nanocellulaire (168) est en retrait de la seconde surface (164b).

2. Article refroidi par transpiration selon la revendication 1, dans lequel la mousse nanocellulaire (168) a une porosité de 5 à 95 %.

3. Article refroidi par transpiration selon la revendication 2, dans lequel la mousse nanocellulaire (168) a un volume de pore de 0,01 à 0,1 millilitre par gramme.

4. Article refroidi par transpiration selon une quelconque revendication précédente, dans lequel la mousse nanocellulaire (168) est métallique.

5. Article refroidi par transpiration selon la revendication 4, dans lequel la mousse nanocellulaire est choisie dans le groupe consistant en le nickel, le tantale, tungstène, le rhénium, le niobium, l'hafnium, le platine, le ruthénium, le rhodium, le palladium, l'osmium, l'iridium, le cuivre, le fer, le molybdène, l'yttrium, le manganèse, l'aluminium, le chrome, le cobalt, et leurs combinaisons.

6. Article refroidi par transpiration selon l'une quelconque des revendications 1 à 3, dans lequel la mousse nanocellulaire (168) est un matériau céramique.

7. Article refroidi par transpiration selon la revendication 6, dans lequel le matériau céramique est choisi dans le groupe consistant en les oxydes, nitrures, carbures, les borures, les siliciures, et leurs combinaisons.

8. Article refroidi par transpiration selon la revendication 6, dans lequel le matériau céramique est une céramique ternaire.

9. Article refroidi par transpiration selon la revendication 6, dans lequel le matériau céramique est choisi dans le groupe consistant en l'oxyde de manganèse, l'oxyde de zinc, le carbure de silicium, l'oxyde d'aluminium, et leurs combinaisons.

10. Article refroidi par transpiration selon une quelconque revendication précédente, l'article étant une voilure (160) comprenant :
un corps de voilure (160a) qui comporte ladite paroi de corps (62) et ledit passage interne (166).

11. Voilure refroidie par transpiration selon la revendication 10, dans laquelle le corps de voilure (160a) comporte un bord d'attaque (182a) et un bord de fuite (182b) et une première paroi latérale (182c) et une seconde paroi latérale (182d) qui est espacée de la première paroi latérale (182c), la première paroi latérale (182c) et la seconde paroi latérale (182d) joignent le bord d'attaque (182a) et le bord de fuite (182b) et définissent au moins partiellement le passage interne (166), et la mousse nanocellulaire (168) est située dans la seconde paroi latérale (182d), et la seconde paroi latérale (182d) est un côté aspiration du corps de voilure (160a).

12. Voilure refroidie par transpiration selon la revendication 10 ou 11, dans laquelle le corps de voilure (160a) comporte un bord d'attaque (182a) et un bord de fuite (182b) et une première paroi latérale (182c) et une seconde paroi latérale (182d) qui est espacée de la première paroi latérale (182c), la première paroi latérale (182c) et la seconde paroi latérale (182d) joignent le bord d'attaque (182a) et le bord de fuite (182b) et définissent au moins partiellement la cavité interne (166), le corps de voilure (160a) partant d'une paroi d'extrémité de plateforme (184), et la mousse nanocellulaire (168) est dans la paroi d'extrémité de plateforme (164).
